# EUROPÄISCHE PATENTANMELDUNG

(11) **EP 0 915 216 A2**
(43) Veröffentlichungstag der Anmeldung: **12.05.1999**
(21) Anmeldenummer: 98119906.0
(22) Anmeldetag: 21.10.1998
(51) Int. Cl.: E04F 13/08, F16B 43/00

(54) **Justierelement für die Befestigung von Wärmeverbundsystemen**

(30) Priorität: 06.11.1997 DE 29719708 U
(71) Anmelder: UPAT GMBH & CO, D-79312 Emmendingen (DE)
(72) Erfinder: Frischmann, Albert, 79341 Kenzingen (DE); Semmler, Markus, 79312 Emmendingen (DE)

(57) **Zusammenfassung**

Justierelement zum Ausgleich von Unebenheiten, bei der Befestigung von Wärmeverbundsystemen, das aus einem Befestigungselement und einer Halteplatte besteht.
Um einen schnellen Ausgleich der Unebenheiten an der Fassadenplatte zu erreichen, ist ein Justierelement vorgeschlagen, das eine Haltebohrung 2 für das Befestigungselement aufweist und daß die Halteplatte 1 mit mehreren, in einem Abstand von 120 ° angeordneten, Ausnehmungen 3 versehen ist.

## Beschreibung

Die Erfindung betrifft ein Justierelement für die Befestigung von Wärmeverbundsystemen mit Schienenkonstruktionen.

Im Bereich Befestigung Von Wärmeverbundsystemen gibt es Anwendungsfälle, wo die Fassadenfläche nicht ausreichend genug plan ist. Um diese Unebenheiten auszugleichen, werden oft Unterlagen von Keilen oder Klötzen eingesetzt und so lange auf der Oberfläche der Fassadenwand ausgerichtet, bis die Oberflächenunebenheiten ausgeglichene sind und ein waagrechtes Niveau erreicht wird. Derartiger Toleranzausgleich der Fassadenwand ist in der Zulassung der Ejot-Wetterschalensicherung WSS, Zul.-Nr. Z-21.8-1017, dargestellt.

Dieser Ausrichtevorgang ist mühevoll und zeitaufwendig.

Aufgabe der Erfindung ist, ein Justierelement zum Ausgleich der Unebenheiten an der Fassadenwand zu schaffen, das einen schnellen und mühelosen Toleranzausgleich der Fassadenoberfläche ermöglicht.

Die Lösung dieser Aufgabe wird durch die in Anspruch 1 angegebenen Merkmale erreicht.

Dadurch, daß das Justierelement als eine runde Scheibe mit Ausnehmungen, die im Umfang in gleichen Abständen angeordnet sind und die Oberseite der Scheibe mit Fasen und die Innenseite mit einem umlaufenden Steg, dessen Innenkontur der Oberseite entspricht, versehen ist, und daß die Bohrungen für das Befestigungselement auf der gleichen Mittellinie zur Kreismitte angeordnet sind, ist ein System bereitgestellt, das einen einfachen und schnellen Toleranzausgleich der Fassadenoberfläche ermöglicht.

Dadurch, daß die Unterseite des Justierelements mit einem umlaufenden Steg, dessen Innenkontur der Außenfläche der Oberseite entspricht, werden die einzelnen Elemente aufeinander steckbar und der Ausgleich mit einem oder mehreren Teilen, wie bei einem Bausteinsystem, auf der Wand einsetzbar.

Um das Befestigungselement in der Haltebohrung sicher zu positionieren, ist es vorgesehen, die Haltebohrung zum Einführbereich hin enger auszuführen. Dadurch wird der Dübel in der Bohrung klemmend gehalten.

Die Erfindung wird nachfolgend anhand der Zeichnung näher erläutert.

Es zeigen:
- Figur 1: Justierelement in Draufsicht
- Figur 2: Innenseite des Justierelements
- Figur 3: die mit erfindungsgemäßem Justierelement durchgeführte Befestigung

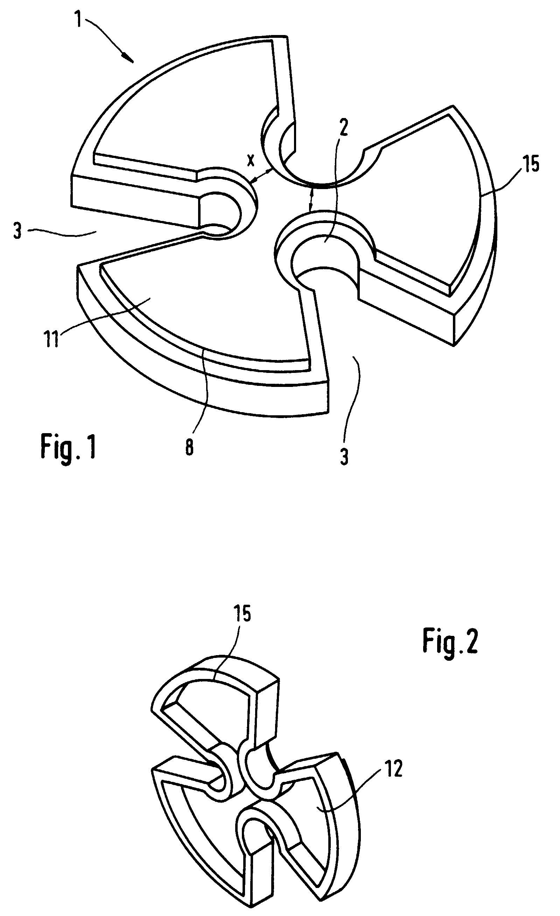

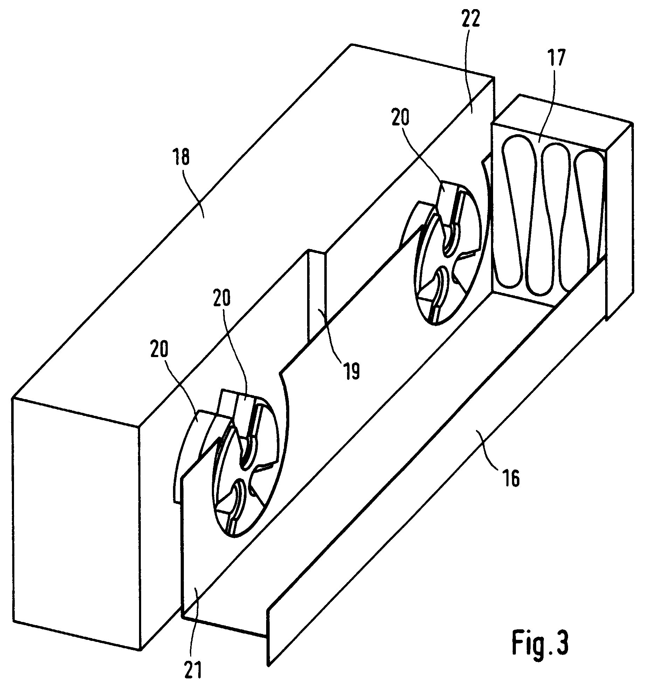

Das in Figur 1 dargestellte Justierelement besteht aus einer Halteplatte 1, die als eine runde Scheibe mit Ausnehmungen 3 und einer Haltebohrung 2 für ein Befestigungselement bzw. einen Dübel versehen ist. Die Haltebohrung 2 für das Befestigungselement ist zum Einführungsbereich hin enger ausgebildet, so daß der Dübel klemmend in der Haltebohrung 2 gehalten werden kann. Die Ausnehmungen 3 in der Halteplatte 1 sind in einem Abstand von 120 ° angebracht. Die Oberseite 11 des Justierelements ist mit einer Fase 8 und die Unterseite 12 mit einem Steg 15, wie die Figur 2 darstellt, versehen. Dadurch können die einzelnen Justierelemente aufeinandergesteckt werden und größere Unebenheiten ausgleichen. Die in Figur 3 dargestellte Schiene 16 für die Dämmstoffplatte 17 liegt an der Bauwand 18. Die als Steinabsatz gezeichnete Unebenheit 19 wird mit Hilfe des erfindungsgemäßen Justierelements 20 in der Weise ausgeglichen, daß im vorderen Bereich 21 zwei Justierelemente und im hinteren Bereich 22 ein Justierelement angebracht wird.

## Patentansprüche

1. Justierelement für die Befestigung von Wärmeverbundsystemen, das aus einem Befestigungselement und einer Halteplatte besteht, **dadurch gekennzeichnet**, daß die Halteplatte (1) als eine runde Scheibe mit einer Haltebohrung (2) für das Befestigungselement und mehrere über den Umfang gleichmäßig verteilte Ausnehmungen (3) versehen ist, und daß die Bohrungen (2) für das Befestigungselement auf der gleichen Mittellinie 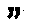 X" zur Kreismitte angeordnet sind.

2. Justierselement nach Anspruch 1, **dadurch gekennzeichnet**, daß die Ausnehmungen (3) in einem Abstand von 120 ° angebracht sind.

3. Justierselement nach Anspruch 1, **dadurch gekennzeichnet**, daß die Haltebohrung (2) für den Dübel zum Einführbereich hin enger ausgebildet ist und der Dübel klemmend gehalten wird.

4. Justierselement nach Anspruch 1, **dadurch gekennzeichnet**, daß die Oberseite (11) des Elements mit umlaufenden Fasen (8) versehen ist.

5. Justierselement nach Anspruch 1, **dadurch gekennzeichnet**, daß die Unterseite (12) des Justierelements mit einem umlaufenden Steg (15), dessen Innenkontur der Oberseite entspricht, versehen ist.
